# EUROPEAN PATENT APPLICATION

(11) **EP 3 335 551 A1**
(43) Date of publication of application: **20.06.2018**
(21) Application number: 16204987.8
(22) Date of filing: 19.12.2016
(51) Int. Cl.: A01K 29/00

(54) **METHOD AND SYSTEM FOR MONITORING LIVESTOCK INSIDE A BUILDING**

(71) Applicant: Farmic AB, 931 27 Skellefteå (SE)
(72) Inventor: Forsén, Gösta, 146 38 Tullinge (SE)
(74) Representative: Bergenstråhle Group AB

(57) **Abstract**

The present invention relates to a method of monitoring livestock inside of a building for keeping the livestock, the method being performed by a monitoring system. The monitoring system comprises a camera (12), a monitoring node (200) and a livestock identity, ID, reader (300), wherein the camera (12) is arranged above the livestock and in communication with the monitoring node (200) and the livestock ID reader (300). The method tracks livestock within a field of view of the camera (12) and sends tracking data, including a first time stamp to the monitoring node (200). The livestock ID reader (300) obtains an identity of the individual of the livestock that is passing the livestock identity reader (300) and sends the obtained identity of the individual, including a second time stamp, to the monitoring node (200). The monitoring node (200) connects the identity of the individual received from the livestock ID reader (300) to tracking data for that individual by using the first and second time stamp.

## Description

### Technical field

The present invention generally relates to monitoring of livestock. In particular the present invention relates to methods, a monitoring node and a monitoring system for monitoring livestock inside of a building for keeping the livestock. Furthermore, the present invention also relates to computer programs and computer program products for implementing the methods.

### Background art

From GB 2387465 a livestock monitoring system is known. The animals are provided with Radio Frequency Identification, RFID, animal tags. The RFID animal tags also includes a Global Positioning System, GPS, for real-time monitoring of the animal location. Animal identifiers and locations are uploaded in a local area wireless network to a receiver, which in turn uploads the data to a web server linked to a host processor for databases. The system enables recording of movement history of individual animals. However, the system is very complex, with a multitude of subsystems, and it relies on a multitude of radio interface standards. Further, the GPS has very limited coverage indoors. This means that the system disclosed in GB2387465 may be relatively expensive and time consuming to commission, and may be relatively more suitable for outdoor monitoring of herds of livestock. Today however, it is more likely that an animal is stabled during at least a period of its life.

FR2759541 discloses a camera system for detecting livestock in heat. Each animal is equipped with a tag marked with an identity code intended to be read by a camera from a distance. A camera is placed on a side wall. Regardless of placement, the disclosed camera system is unable to distinguish between multiple locations - and therefore further fail to register movements - along the camera's line-of-sight. As an improvement it is suggested that the camera be placed on rails. It is also suggested that the identification tag be placed in an upright and elevated position, on a collar adapted for each individual animal's physiognomy.

Yet, still with these adaptions, it is believed that the disclosed camera system may only detect heat related "hyperactivity" through pulse-shaped binary readings. Further, in a non-clean environment, such as in a livestock stable, optical reading of an identification code from a distance is likely to be obstructed by dirt or debris covering the tag. Such obstruction will render the disclosed system non-functional, since it relies on an initial identification. Hence, FR2759541, much like GB2387465 discloses a rigid system, with the added drawback of being less appropriate in non-clean environments. Lastly, the disclosed system, while it may be sufficient for detecting the occurrence of an animal in heat, may not accurately register movement patterns.

EP 2852280 discloses a Light Emitting Diode, LED, luminaire for use in dairy barns. The LED luminaire comprises a base plate on which a first LED arrangement is provided. The LED arrangement comprises a plurality of LEDs of a first type having a peak wavelength in the wavelength range of between 500 and 600 nm. The LED arrangement also comprises a least one LED of a second type having a wavelength range between 440 and 480 nm. There is also an optical system for distributing the intensity of light emitted from the LEDs such that the intensity peak is not directed straight downwards. There are further LED arrangements which are adapted to different conditions such as being suitable for night lightening. However, the LED luminaire is not adaptable to dynamic conditions such different light conditions inside a barn, due to weather conditions and the time of year.

### Summary

The object of the present invention is to obviate at least some of the above disadvantages and provide improved methods, nodes and systems for individual monitoring and registering of movement of livestock and other animals that may be kept indoors in periods. In particular it is an object to provide a simple system, which is easy to set up and which does not need to be calibrated before it is put into operation.

According to an aspect of the present invention there is provided a method of monitoring livestock inside of a building for keeping the livestock. The method is performed by a monitoring system comprising a camera, a monitoring node and a livestock identity, ID, reader. The light assembly is arranged above the livestock and in communication with the monitoring node and the livestock ID reader. The method tracks livestock within a field of view of the camera and sends tracking data, including a first time stamp, for each tracked individual animal of the livestock from the camera to the monitoring node. The livestock ID reader obtains an identity of the individual animal of the livestock that is passing the livestock identity reader, sends the obtained identity of the individual animal of the livestock, including a second time stamp, from the livestock ID reader to the monitoring node, and connects, in the monitoring mode, the identity of the individual animal received from the livestock ID reader to the tracking data for that individual animal by using the first and second time stamp. The camera may preferably be integrated in a light assembly arranged above the livestock and in communication with the monitoring node.

Preferably the step of sending the obtained identity from the livestock ID reader to the monitoring node comprises sending a light pulse from the livestock ID reader to the light assembly, wherein the light pulse comprises data associated with the identity of the individual animal, the second time stamp and the position of the livestock ID reader, and sending the received data associated with the identity of the individual animal, the second time stamp and the position of the livestock ID reader to the monitoring node.

Furthermore, the method may also comprise measuring, with the camera, the light condition inside the building, comparing, with a controller arranged in the light assembly, the measured light condition with reference values for a desired light condition. When there is a difference in the comparison between the measured and desired light condition said controller in the monitoring system controls the output of a light source arranged in the light assembly, such that the light condition in the building for keeping the livestock corresponds to the reference values for the desired light condition.

According to another aspect of the present invention there is provided a method of monitoring livestock inside of a building for keeping the livestock, where the method is performed by a monitoring node that is part of a monitoring system comprising a camera, the monitoring node and a livestock identity, ID, reader. The camera is arranged above the livestock and in communication with the monitoring node and the livestock ID reader. The method receives tracking data from the camera, which tracking data is associated with livestock within a field of view of the camera and includes a first time stamp, for each tracked individual animal of the livestock. The method furthermore receives, from the livestock ID reader, an identity of an individual animal of the livestock, including a second time stamp, that is passing the livestock ID reader and connects, the identity of the individual animal received from the livestock ID reader to the received tracking data for that individual animal by using the first and second time stamp. The camera may preferably be integrated in a light assembly arranged above the livestock and in communication with the monitoring node.

In an embodiment the method furthermore receives, from the light assembly, data relating to a motion of each tracked individual animal and compares, with a controller, the received data with stored data associated with livestock in heat. In response to finding a match between the received data for an individual animal of the livestock and the stored data the method transmits, with a communication interface, an alarm message to an alarm device comprising information that there is livestock in heat together with information about which individual animal of the livestock that is in heat.

In yet another embodiment the method further determines by analysing the received tracking data, with a controller, that there is an individual animal of the livestock that has been still for more than a predetermined period of time, and in response thereto transmits, with a communication interface, an alarm message to an alarm device comprising information that there is livestock that has been still for more than the predetermined period of time together with information about which individual animal of the livestock that is still.

According to yet another aspect of the present invention a monitoring system for monitoring livestock inside of a building for keeping the livestock is provided. The monitoring system comprises a camera, a monitoring node and a livestock identity, ID, reader. The camera is arranged above the livestock and in communication with the monitoring node and the livestock reader. The camera, the monitoring node and the livestock ID reader each comprise a controller, each of which comprise a processor and a memory. Each memory comprises instructions which when executed by the processor causes the monitoring system to track livestock within a field of view of the camera, send tracking data, including a first time stamp, for each tracked individual animal of the livestock from the camera to the monitoring node, obtain, with the livestock ID reader, an identity of the individual animal of the livestock that is passing the livestock ID reader, send the obtained identity of the individual animal of the livestock, including a second time stamp, from the livestock ID reader to the monitoring node, and connect, in the monitoring mode, the identity of the individual animal received from the livestock ID reader to tracking data for that individual animal by using the first and second time stamp. The camera may preferably be integrated in a light assembly arranged above the livestock and in communication with the monitoring node.

In one embodiment the monitoring system is further caused to send a light pulse from the livestock ID reader to the light assembly, said light pulse comprising data associated with the identity of the individual, the second time stamp and the position of the livestock ID reader, and send the received data from the light assembly to the monitoring node.

In another embodiment the monitoring system is further caused to measure, with the camera, the light condition inside the building, compare, with the controller arranged in the light assembly, the measured light condition with reference values for a desired light condition, and when there is a difference in the comparison between the measured and desired light condition control the output of a light source arranged in the light assembly with said controller, such that the light condition in the building for keeping the livestock corresponds to the reference values for the desired light condition.

According to another aspect there is provided a monitoring node for monitoring livestock inside of a building for keeping the livestock. The monitoring node is a part of a monitoring system comprising a camera, the monitoring node and a livestock identity, ID, reader. The camera is arranged above the livestock and in communication with the monitoring node and the livestock ID reader. The monitoring node comprises a controller, which comprises a processor and a memory. The memory comprises instructions which when executed by the processor causes the monitoring system to receive, from the camera, tracking data, associated with livestock within a field of view of the camera, including a first time stamp, for each tracked individual animal of the livestock, receive, from the livestock ID reader, an identity of an individual animal of the livestock, including a second time stamp, that is passing the livestock identity reader, connect, the identity of the individual animal received from the livestock ID reader to the received tracking data for that individual animal by using the first and second time stamp. The camera may preferably be integrated in a light assembly arranged above the livestock and in communication with the monitoring node.

In one embodiment the monitoring node is further caused to receive, from the light assembly, data relating to a motion of each tracked individual animal, compare, with the controller, the received data with stored data associated with livestock in heat, and in response to finding a match between the received data for an individual animal of the livestock and the stored data, transmit, with a communication interface, an alarm message to an alarm device comprising information that there is livestock in heat together with information about which individual animal of the livestock that is in heat.

In a further embodiment the monitoring node is further caused to determine by analysing the received tracking data, with the controller, that there is an individual animal of the livestock that has been still for more than a predetermined period of time, and in response thereto transmit, with a communication interface, an alarm message to an alarm device comprising information that there is livestock that has been still for more than a predetermined time together with information about which individual animal of the livestock that is still.

According to another aspect, a computer program and a computer program product comprising computer readable code is provided, which when executed on a processor of the monitoring node or the monitoring system causes the monitoring node or the monitoring system to behave as a monitoring node and a monitoring system described in previous sections.

There are many benefits with the present invention. The monitoring system is easy to set up without any need for calibration of the livestock ID reader when they are positioned in the building for keeping livestock. By using the first and second time stamp it is easy to tie together the identity of the individual animal that passes the livestock ID reader with the tracking data for that individual animal obtained by the camera.

Furthermore, having the camera integrated in the light assembly will make it easier for the camera to track the livestock, since the closeness between the light source and the camera will reduce shadows in the line-of sight of the camera, especially as the light assembly is arranged above the livestock. Shadows are a problem today when tracking livestock. Yet another advantage is that the camera may also be used as a sensor for dynamically controlling the light depending on the ambient conditions. Further possible features and benefits of this solution will become apparent from the detailed description below.

### Brief description of drawings

The solution will now be described in more detail by means of exemplary embodiments and with reference to the accompanying drawings, in which:
Fig. 1 is an overview of a monitoring system for monitoring livestock inside of a building for keeping the livestock.
Fig. 2 is a block diagram illustrating a light assembly in more detail, according to possible embodiments.
Fig. 3 is a block diagram illustrating the livestock monitoring system, according to possible embodiments.
Fig. 4 is a block diagram illustrating a monitoring node in more detail, according to possible embodiments.
Fig. 5 is a block diagram illustrating a livestock ID reader in more detail, according to possible embodiments.
Fig 6 is a flowchart of a method performed by the monitoring system according to one possible embodiment.
Fig. 7 is a flowchart of the method performed by the monitoring system according to another possible embodiment.
Fig. 8 is a flowchart of the method performed by the monitoring system according to yet another possible embodiment.
Fig 9 is a flowchart of a method performed by the monitoring node according to one possible embodiment.
Fig. 10 is a flowchart of the method performed by the monitoring node according to another possible embodiment.
Fig. 11 is a flowchart of the method performed by the monitoring node according to yet another possible embodiment.
Fig. 12 is a block diagram illustrating a camera in more detail, according to possible embodiments.

### Detailed description

Briefly described, a solution is provided to enable monitoring of livestock without the hassle of calibration and without troublesome shadows.

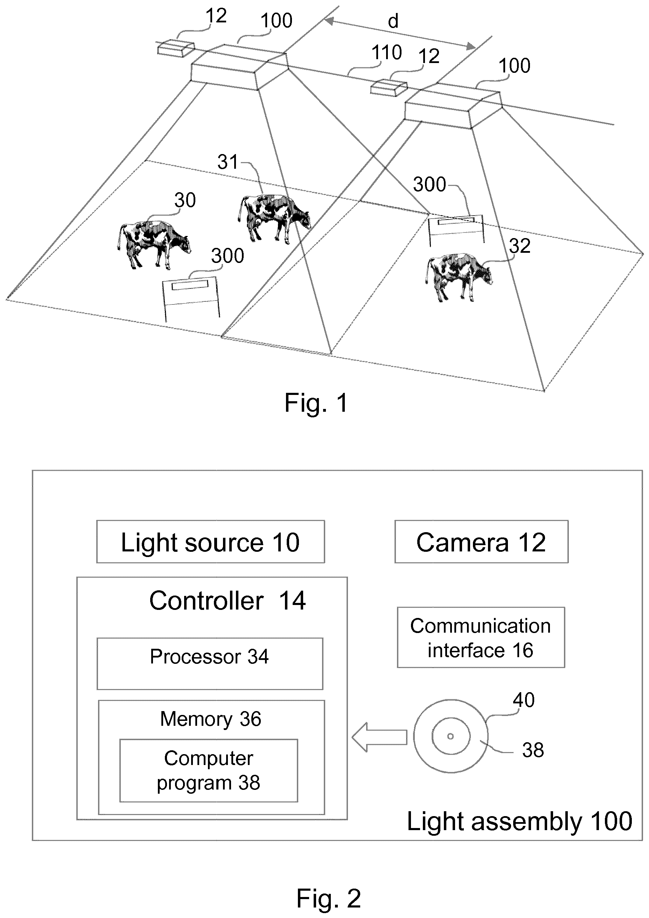

**Fig. 1** is an overview of a monitoring system for monitoring livestock inside of a building for keeping the livestock. The livestock may be any domesticated animal raised in an agricultural setting to produce commodities such as food, fiber, and labor. The present invention is directed towards use inside of a building for keeping livestock, often referred to as barn. Thus in the context of the present invention the term barn will be used for any building in which the livestock is kept.

Fig.1 shows two light assemblies 100 arranged on a cable 110 with a distance d to each other and above the livestock 30, 31 and 32 in a barn. The light assembly 100 may be provided with a camera (not shown in Fig. 1 as part of the light assembly) having a field-of-view shown with dotted lines. As an alternative the camera 12 may be a separate unit arranged close to the light assembly 100 as shown in Fig. 1. In order to not unnecessarily smudge Fig. 1 the filed-of-view of the stand-alone cameras is not shown. As is evident in Fig. 1 the two light assemblies 100 have overlapping field-of-views, as also is the case when using the stand-alone cameras 12. The monitoring system further comprises one or more livestock ID readers 300 which are able to read the identity of livestock 30, 31 and 32 passing by the livestock ID reader 300 from some type of tag carried by the livestock, such as a RFID tag. Instead of the RFID tag, an ear tag provided with an identification text could be optically obtained by the livestock ID reader. Another alternative to obtain the identity of the livestock is to optically recognize the livestock itself as an individual by using some type of image recognitions technique. It should be understood that Fig. 1 only, for illustrative purposes, shows a limited space of a normal sized barn and that the monitoring system may comprise an arbitrary number of light assemblies 100 and/or cameras 12 and livestock ID readers 300, the number being adapted to the size of the barn.

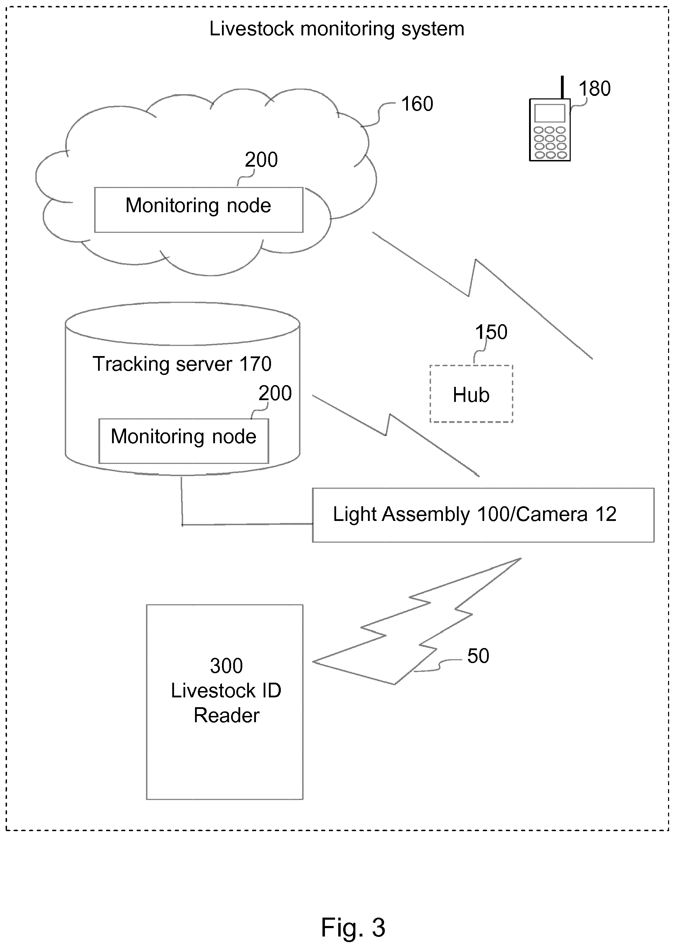

Turning now to **Fig. 3** the livestock monitoring system will be further described. In addition to the light assembly 100 and the livestock ID reader 300 shown in Fig. 1 the monitoring system also comprises a monitoring node 200. The monitoring node 200 may be provided on a tracking server 170. The tracking server 170 is connected to the light assembly 100, either via a cable or wireless via for example a local WIFI net. Physically the tracking server 170 may be housed in or close by the barn or in a server room somewhere remote from the barn.

Alternatively the monitoring node 200 is part of a cloud solution 160 and may be provided anywhere and be accessible through the Internet. Depending on the setup of the monitoring system, the monitoring system may also comprise a hub 150 for enhancing communication between different entities of the system. Furthermore, the livestock monitoring system may also comprise some type of user equipment 180, UE, such as a mobile telephone, smartphone, laptop, computer tablet etc. for receiving alerts or alarms from the monitoring node 200. As is further evident from Fig. 3 the livestock ID reader 300 communicates with the light assembly 100 and/or camera 12 by for example sending light pulses 50, which will be closer described below.

Turning now to **Fig. 2** one embodiment of the light assembly 100 will be described in greater detail. The light assembly 100 comprises a light source 10, preferably LEDs, the camera 12, a communication interface 16 and a controller 14 comprising a processor 34 and a memory 36.

The light source 10 comprises as mentioned above LEDs, which are very energy efficient and easy to control with the controller 14. Of course there are also other light sources that may be used such as halogen lamps or fluorescent lamps. The benefit with LEDs in addition to their energy efficiency is that they allow a greater flexibility when it comes to designing the color temperature of the light source 10.

The camera 12 is typically a simple RGB camera, but of course also other cameras may be used. The controller 14 may be tailor made for this application or be an off-the-shelf processor and memory configured for this application. Thus memory 36 may have stored a computer program 38, which comprises computer program code. The computer program code is adapted to implement a part of the method, if executed on the processor 34, of monitoring livestock inside the barn that is performed by the monitoring system of which the light assembly 100 is a part.

As an alternative the computer program 38 may be stored on a computer readable storage medium 40 of a computer program product. Such a computer program product may for example be a USB-stick or CD. The computer program 38 may of course also be downloaded directly to the memory 36 via the communication interface 16. The communication interface 16 is configured to be able to communicate with other entities of the monitoring system, such as the livestock ID reader 300, the monitoring node 200, the hub 150 or the user equipment 180.

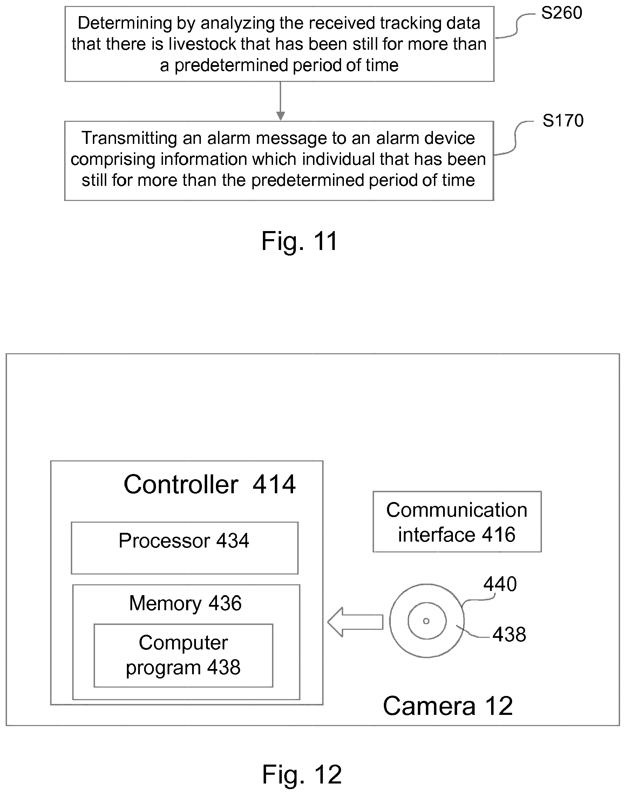

In another embodiment the camera 12 is not integrated in the light assembly 100. In such a case the camera 12 itself will comprise further functionality for carrying out communication with the monitoring node 200 and the livestock ID reader 300, which in the above described embodiment was carried out by the light assembly 100. Turning now to **Fig. 12** such a camera 12 with extended functionality is shown. The camera 12 comprises a communication interface 416 and a controller 414 comprising a processor 434 and a memory 436.

The camera 12 itself, as mentioned above, may typically be a simple RGB camera. It is of course also possible to use other types of cameras having the capability to track livestock. The controller 414 may be tailor made for this application or be an off-the-shelf processor and memory configured for this application. Thus memory 436 may have stored a computer program 438, which comprises computer program code. The computer program code is adapted to implement a part of the method, if executed on the processor 434, of monitoring livestock inside the barn that is performed by the monitoring system of which the camera 12 is a part.

As for the light assembly 100, also in this case with a stand-alone camera 12, the computer program 438 may as an alternative be stored on a computer readable storage medium 440 of a computer program product. Such a computer program product may for example be a USB-stick or CD. The computer program 438 may of course also be downloaded directly to the memory 436 via the communication interface 416. The communication interface 416 is configured to be able to communicate with other entities of the monitoring system, such as the livestock ID reader 300, the monitoring node 200, the hub 150 or the user equipment 180.

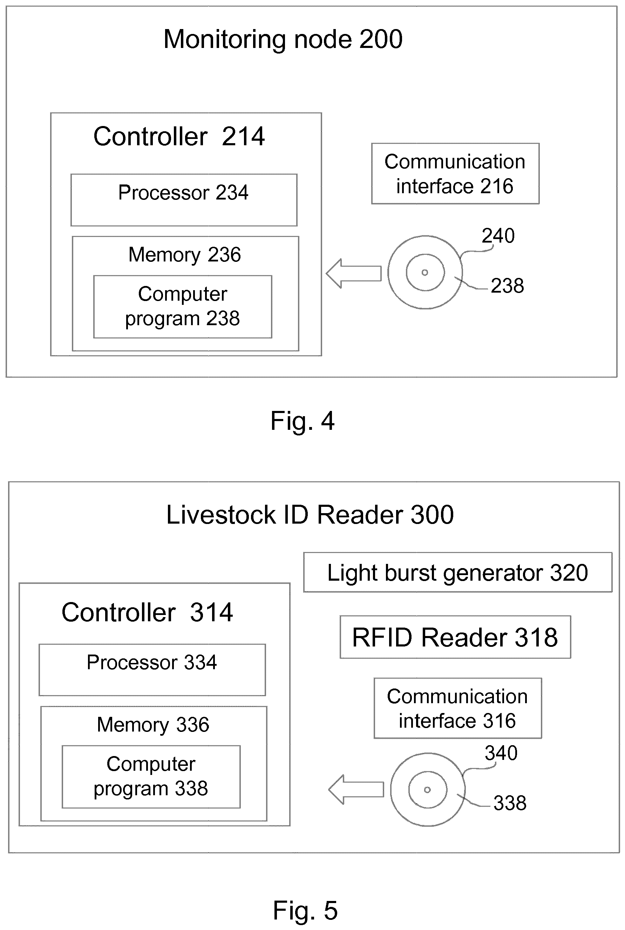

**Fig. 4** is a block diagram illustrating the monitoring node 200 in more detail. The monitoring node 200 comprises a communication interface 216 and a controller 214 comprising a processor 234 and a memory 236. As for the controller 14 in the light assembly 100 also the controller 214 may be tailor made or be an off-the-shelf processor and memory. Thus memory 236 may have stored a computer program 238, which comprises computer program code. The computer program code is adapted to implement the method performed by the monitoring node 200, if executed on the processor 234, of monitoring livestock inside the barn. The computer program code of the monitoring node 200 may furthermore perform a part of the method, if executed on the processor 234, of monitoring livestock inside the barn that is performed by the monitoring system of which the monitoring node 200 is a part.

Also for the monitoring node 200 the computer program 238 may be stored on a computer readable storage medium 240 of a computer program product or be downloaded directly to the memory 236 via the communication interface 216. The communication interface 216 is configured to be able to communicate with other entities of the monitoring system, such as the light assembly 100, the camera 12, the livestock ID reader 300, the hub 150 or the user equipment 180.

Thus, when the instructions of the computer program 238 in the memory 236 of the controller 214 are executed by the processor 234 of the monitoring node 200 it causes the monitoring node 200 to receive tracking data from the light assembly 100 with an integrated camera 12 or directly from the camera 12 itself. The tracking data is associated with livestock that is within a field of view of the camera 12. The tracking data also includes a first time stamp, for each tracked individual 30, 31, 32 of the livestock as it passes the livestock ID reader 300. With other words the first time stamp will get updated every time a tracked individual passes a livestock ID reader 300. Furthermore, the monitoring node 200 is also caused to receive the identity of the individual 30, 31, 32 of the livestock that passes the livestock ID reader 300 from the livestock ID reader 300. The received identity also includes a second time stamp corresponding to the passing time of the individual 30,31,32.

Having received this information the monitoring node 200 is, by the computer program, caused to connect the identity of the individual 30, 31, 32 received from the livestock ID reader 300 to the received tracking data for that individual 30, 31, 32 by using the first and second time stamp. Since the first time stamp that is included in the tracking data is generated each time an individual passes the livestock ID reader 300, the first stamp indicates the same time as is indicated by the second time stamp obtained by the livestock ID reader 300 when the RFID reader 318 retrieves the identity of the passing individual. By means of these time stamps the tracking data may easily be tied to the individual 30, 31, 32 livestock that passes a livestock ID reader 300.

In one embodiment the received tracking data may relate to a motion of each tracked individual 30, 31, 32. Such motion data may be very useful especially if it is compared with different types of motion data stored data in the memory 236 of the monitoring node 200. The stored data may for example be associated with livestock in heat, immovable livestock, or recognizable motion patterns or resting patterns related to different types of diseases or ailments, such as an eating disorder, lameness etc. Thus, in one embodiment the controller 214 of the monitoring node 200 is caused to compare the received tracking data with stored data associated with livestock in heat, and in response to finding a match between the received data for an individual 30, 31, 32 of the livestock and the stored data transmit an alarm message, via the communication interface 216 to an alarm device 180 comprising information that there is livestock in heat together with information about which individual 30, 31, 32 of the livestock that is in heat. The alarm device 180 may as mentioned above be a mobile phone, a smart phone, a computer tablet, a laptop etc. The alarm message could for example be in form of a text message, such as a Small Message Service, SMS, or an e-mail.

In another embodiment the monitoring node 200 is caused to analyse the received tracking data and determine, by means of the controller 214, that there is an individual 30, 31, 32 of the livestock that has been still, i.e. not moved, for more than a predetermined period of time, and in response thereto transmit an alarm as mentioned above. This time the alarm message instead comprises information that there is livestock that has been still for more than a predetermined time together with information about which individual 30, 31, 32 of the livestock that has not moved. As is understood by a person skilled in the art there may be many other conditions connected to the motion pattern of the livestock that may be analyzed and which may lead to the sending of alarm messages if some criteria are fulfilled.

**Fig. 5** is a block diagram illustrating the livestock ID reader 300 in more detail. In one embodiment the livestock ID reader 300 comprises a communication interface 316, a RFID reader 318, a light burst generator 320 and a controller 314 comprising a processor 334 and a memory 336. As for the other entities above having a controller, also the controller 314 may be tailor made or be an off-the-shelf processor and memory. Thus memory 336 may have stored a computer program 338, which comprises computer program code. The computer program code is adapted to implement part of the method performed by the monitoring system of which the livestock ID reader is a part, if executed on the processor 334.

Also for the livestock ID reader 300 the computer program 338 may be stored on a computer readable storage medium 340 of a computer program product or be downloaded directly to the memory 336 via the communication interface 316.

The RFID reader 318 is configured to read an RIFID tag provided on the livestock. When reading the RFID tag of for example a cow passing the livestock ID reader 300 the ID of the cow is retrieved and stored together with a time stamp indicating the time of passage of the cow as mentioned above. The light burst generator 320 is configured to send a light pulse or burst to be received by the camera 12 or the light assembly 100 comprising the camera 12. The light pulse or burst may comprise information about the identity of the individual animal 30, 31, 32 that is passing the livestock ID reader 300 together with a second time stamp as mentioned above. This information could of course also be sent to the light assembly 100 or camera 12 via the communication interface 316 using the local WIFI net or the like. However, sending this information in a light pulse or burst has the benefit that the camera 12 that receives the light pulse may determine the position from where the light pulse is sent, i.e. the position of the livestock ID reader 300. Since the position of livestock ID reader 300 is retrieved in such an easy and simple manner there is no need for any calibration or lining up of the livestock ID reader 300 when setting up the monitoring system. It is also easy to move the livestock ID reader without that it affects the setup of the monitoring system. In another embodiment the livestock ID reader 300 only sends the light pulse or burst, without any information, to the light assembly 100 or the camera 12 in order to determine the position of the livestock ID reader 300. The information relating to the ID of the individual livestock that is passing the livestock ID reader 300 together with the second timestamp may instead be sent directly to monitoring node 200.

In other embodiments the livestock ID reader may instead of the RFID reader comprise on optical reader capable of reading information on an ear tag of the livestock or any other identification tags provided on the livestock. In yet another embodiment the optical reader may be connected to an image recognition unit for determining the identity of the livestock by comparing the obtained image of the livestock with images of all of the livestock stored in a database.

Returning now to Fig. 3 the monitoring system will be closer described as the computer programs 38, 238, 338, 448 and its instructions stored in the memories 36, 236, 336, 436 are executed by the processors 34, 234, 334, 434. This execution causes the monitoring system to track livestock within the field of view of the camera 12 and send tracking data, including a first time stamp, for each tracked individual 30, 31, 32 of the livestock from the light assembly 100 or camera 12 to the monitoring node 200. The livestock ID reader 300 of the monitoring system is further caused to obtain the identity of the individual animal 30, 31, 32 of the livestock that is passing the livestock identity reader 300 and send the obtained identity of the individual animal 30, 31, 32, including a second time stamp, to the monitoring node 200. The monitoring node 200 is then caused to connect the identity of the individual 30, 31, 32 received from the livestock ID reader 300 to tracking data for that individual 30, 31, 32 by using the first and second time stamp. Thus, as mentioned above it is possible to tie the tracking data that is recorded by the camera 12 to a specific individual 30, 31, 32 of the livestock by using the first and second time stamp.

In one embodiment of the monitoring system, as mentioned above, the livestock ID reader 300 is caused to send the light pulse 50 to the light assembly 100, said light pulse 50 comprising data associated with the identity of the individual 30, 31, 32, the second time stamp and the position of the livestock ID reader 300. The light assembly 100 or camera 12 is in turn caused to send the received data associated with the identity of the individual 30, 31, 32, the second time stamp and the position of the livestock ID reader 300 to the monitoring node 200. Thus, in context of the present invention, when stating that the identity of the individual 30, 31, 32, that is passing the livestock ID reader 300 and the second time stamp associated therewith is sent to the monitoring node 200, it may either be sent to the monitoring node 200 directly or via for example the light assembly 100, the camera 12 or the hub 150.

In another embodiment of the monitoring system the camera 12 of the light assembly 100 is caused to measure the light condition inside the building and the controller 14 of the light assembly 100 is caused to compare the measured light condition with reference values for a desired light condition. These reference values may be stored in the memory 36 of the light assembly 100. In response to a difference in the comparison between the measured and desired light condition the controller 14 is caused to control the output of the light source 10 arranged in the light assembly 100, such that the light condition in the building for keeping the livestock corresponds to the reference values for the desired light condition.

In yet another embodiment the reference values may be stored in the memory 236 of the monitoring node 200 instead. In such a case the light assembly 100 is caused to send the measured light conditions to the monitoring node 200, which is caused to perform the comparison mentioned above and send the result back to the light assembly 100.

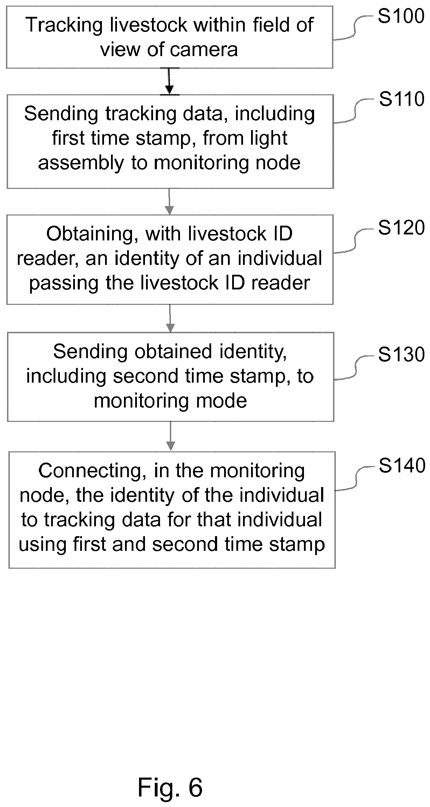

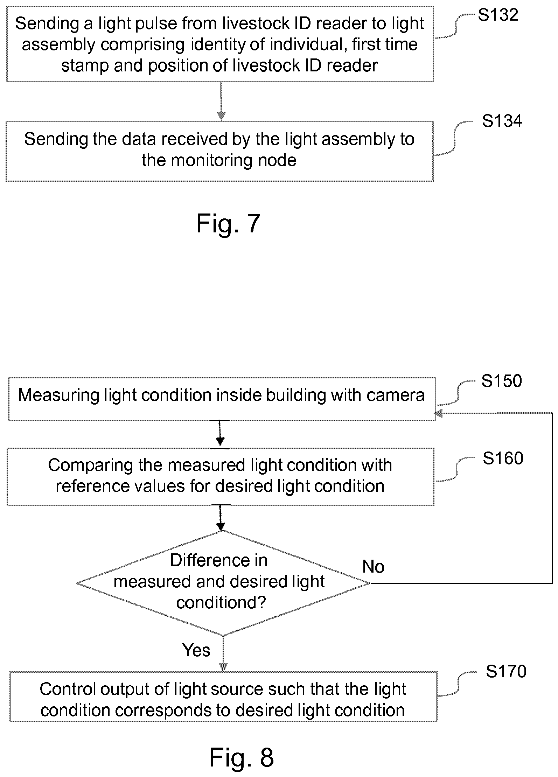

Turning to **Fig. 6** a flowchart for a method of monitoring livestock performed by the monitoring system according to one possible embodiment is shown. The method may for example be performed in the monitoring system shown in Fig. 3. In a step S100 the method tracks livestock within the field of view of the camera 12. The tracking data obtained or retrieved by the camera 12 may be stored in the memory 36 of the light assembly 100. In step S110 the light assembly 100 or camera 12 sends the tracking data, including a first time stamp, for each tracked individual animal 30, 31, 32 of the livestock to the monitoring node 200. The light assembly 100 or camera 12 may send or "stream" the tracking data either directly to the monitoring node 200 or first buffer it in the memory 36 and send tracking data with some delay. In step S120 the livestock ID reader 300 obtains the identity of an individual 30, 31, 32 of the livestock that is passing the livestock identity reader 300 together with a second time stamp that is indicating the instant of time when individual 30, 31, 32 of the livestock passes the livestock ID reader 300. The obtained identity and second time stamp may be stored or buffered in the memory 336 of the livestock ID reader 300 before the livestock ID reader 300 in step S130 sends this information to the monitoring node 200. This information may be sent directly to the monitoring node 200 using the communication interface 316 or it may be sent to the monitoring node 200 via the light assembly 100 or camera 12 as will be further explained below in conjunction with Fig. 7. Anyhow, when using "sending to the monitoring node 200" in context of the present invention, the sending may done directly to the monitoring node 200 or via one or more other nodes, such as the light assembly 100 or the camera 12. In step S140 the monitoring mode 200 connects the identity of the individual animal 30, 31, 32 received from the livestock ID reader 300 to the tracking data for that individual animal 30, 31, 32 by using the first and second time stamp.

Turning now to **Fig. 7** one embodiment of the method of monitoring livestock will be described. In this embodiment the information of the identity of the individual animal 30, 31, 32 passing the livestock ID reader 300 and the second time stamp are sent to the monitoring node 200 via the light assembly 100 or the camera 12. This embodiment does not use the communication interface 316 when sending the information, but instead uses the light burst generator 320 to send a light pulse 50 from the livestock ID reader 300 to the light assembly 100. The light pulse 50 does not only comprise data associated with the identity of the individual animal 30, 31, 32 and the second time stamp as the previous embodiment, but also the position of the livestock ID reader 300. It is actually the light pulse 50 in itself that comprises the information about the position of the livestock ID reader 300, i.e. the camera 12 receives the light pulse and the controller 14, 414 uses the information from which direction the light pulse 50 was received in order to calculate the position of the livestock identity reader 300. Thus, using a light pulse 50 as communication between the livestock ID reader 300 and the light assembly 100 makes it possible to position the livestock ID readers 300 arbitrary in the barn without the need for any calibration, since the light pulse 50 itself reveals the position. Compared to the embodiment described in conjunction with Fig. 6, step S130 comprises step S132 in which the livestock ID reader 300 sends the light pulse 50 to the light assembly 100 or the camera 12 with the information about the identity of the individual, the second time stamp and the position of the livestock ID reader, which information in turn the light assembly 100 or camera 12 sends, in step S134, to the monitoring node 200.

In another embodiment disclosed in **Fig. 8** the method performed by the monitoring system is also capable of controlling the light conditions inside the barn. This is done by means of the camera 12 which, in step S150, measures the light condition inside the barn. The controller 14 in the light assembly 100 then compares, in step S160, the measured light condition with reference values for a desired light condition. The reference values may be stored in the memory 36 of the controller 14 in the light assembly 100 or in the memory 236 of the controller 214 in the monitoring node 200. If the reference values are stored in the monitoring node 200 the light assembly 100 retrieves the reference values by using the communication interfaces 16 and 216. If there is a difference between the measured light condition and the desired light condition the method proceeds to step S170 in which the controller 14 of the light assembly 100 controls the output of a light source 10 arranged in the light assembly, such that the light condition in the building for keeping the livestock corresponds to the reference values for the desired light condition. The desired light condition may vary over the time of the day. For example the desired light is much less during the night than during the day. If there is no difference when the comparison between measured light and desired light the method starts measuring the light condition inside the barn again, i.e. jumps back to step S150.

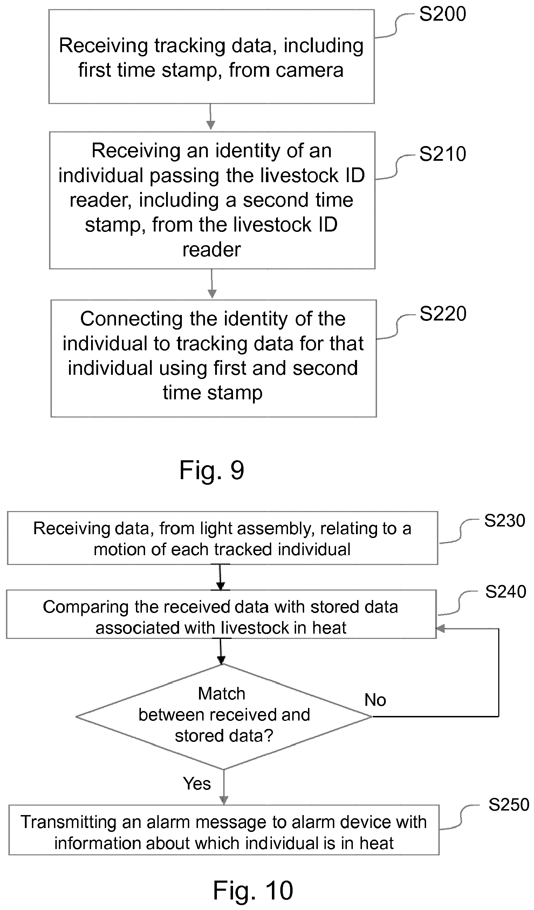

**Fig 9** is a flowchart of the method performed by the monitoring node 200 according to one possible embodiment. In step S200 the monitoring node 200 receives tracking data from the light assembly 100 or the camera 12. The tracking data is associated with livestock that is within the field of view of a camera 12. The tracking data also includes the first time stamp, i.e. the instant of time when the tracked individual 30, 31, 32 of the livestock passes a livestock ID reader 300. This instant of time may for example be recognized by the camera 12 when the tracking data not only reveals the tracked individual livestock 30, 31, 32 is in the field of view of the camera, but the individual livestock 30, 31, 32 is in the vicinity of the livestock ID reader 300. The monitoring node 200 further receives from the livestock ID reader 300, in step S210, the identity of the individual 30, 31, 32 of the livestock that is passing the livestock ID reader 300. The information about the identity of the individual 30, 31, 32 of the livestock that is passing the livestock ID reader 300 is accompanied by a second time stamp indicating the passing time of the individual 30, 31, 32. With this received information the monitoring node 200 connects or ties together, in step S220, the identity of the individual 30, 31, 32 received from the livestock ID reader with the received tracking data for that individual 30, 31, 32 by using the first and second time stamp.

Turning now to **Fig. 10** another embodiment of the method performed by the monitoring node 200 is shown. In this embodiment the tracking data is used to determine if there is livestock in heat. Thus, in step S230 the monitoring node 200 receives tracking data relating to a motion of each tracked individual animal 30, 31, 32 in the livestock. When livestock is in heat their motion pattern is altered and it this fact that is used to determine that an individual animal of the livestock is in heat. Depending on which type of livestock that is in heat the motion pattern may vary, but what is important is that data is stored in the memory 236 of the monitoring node 200 that corresponds to the type of livestock that is tracked. In step S240 the controller 214 in the monitoring node 200 compares the received data with stored data associated with livestock in heat. If there is a match between the received data for an individual animal 30, 31, 32 of the livestock and data stored in the memory 236 the communication interface 216 of the monitoring node 200, in step S250, transmits an alarm message to an alarm device 180 comprising information that there is livestock in heat together with information about which individual 30, 31, 32 of the livestock that is in heat. As mentioned above the alarm device may be any type of user equipment, such as a mobile telephone, a smartphone, a laptop, a tablet computer etc.

**Fig. 11** is a flowchart of the method performed by the monitoring node 200 showing yet another possible embodiment. In this embodiment the tracking data is analyzed to determine if an individual animal 30, 31, 32 of the livestock stands still for more than a predetermined time, which may be indicative of that an individual animal 30, 31, 32 is seriously ill or maybe even dead. Thus, in step S260 the controller 214 of the monitoring node 200 determines, by analysing the received tracking data, that there is an individual animal 30, 31, 32 of the livestock that has been still for more than a predetermined period of time. In response to such a determination the communication interface 216 of the monitoring node 200, in step S270 transmits an alarm message to an alarm device 180 comprising information that there is livestock that has been still for more than the predetermined period of time together with information about which individual 30, 31, 32 of the livestock that has been still.

It should be understood that there may be numerous other states, such as different resting patterns, lameness or eating disorders, in which the livestock may be in and that can be diagnosed by analyzing tracking data obtained by the camera 12. If there is a special motion pattern associated to a special state or condition for the livestock this state or condition may be determined with the present invention and an alarm message may also be sent as a response thereto. This is a great benefit for a farmer, since he or she can spend lesser time in the barn and still get an alarm if something out of the ordinary happens to the livestock.

While the solution has been described with reference to specific exemplary embodiments, the description is generally only intended to illustrate the inventive concept and should not be taken as limiting the scope of the solution. For example the described processors may comprise a single Central Processing Unit (CPU), or could comprise two or more processing units. For example, the processors may include general purpose microprocessors, instruction set processors and/or related chips sets and/or special purpose microprocessors such as Application Specific Integrated Circuits (ASICs), Field Programmable Gate Arrays (FPGAs) or Complex Programmable Logic Devices (CPLDs). The processors may also comprise a storage for caching purposes.

The computer programs may be carried by computer program products in the different nodes or entities of the monitoring system, in the form of memories having a computer readable medium and being connected to the processors. The computer program products may be carried by a medium, such as CD, DVD, flash memory, or downloadable objects. Each computer program product or memory thus comprises a computer readable medium on which the computer program is stored e.g. in the form of computer program units. For example, the memories may be a flash memory, a Random-Access Memory (RAM), a Read-Only Memory (ROM) or an Electrically Erasable Programmable ROM (EEPROM), and the program units could in alternative embodiments be distributed on different computer program products in the form of memories within the described monitoring system.

## Claims

1. A method of monitoring livestock inside of a building for keeping the livestock, the method being performed by a monitoring system comprising a camera (12), a monitoring node (200) and a livestock identity, ID, reader (300), wherein the camera (12) is arranged above the livestock and in communication with the monitoring node (200) and the livestock ID reader (300), the method comprising:
- tracking (S100) livestock within a field of view of the camera (12),
- sending (S110) tracking data, including a first time stamp, for each tracked individual (30; 31; 32) of the livestock from the camera (12) to the monitoring node (200),
- obtaining (S120), with the livestock ID reader (300), an identity of the individual (30; 31; 32) of the livestock that is passing the livestock identity reader (300),
- sending (S130) the obtained identity of the individual (30; 31; 32) of the livestock, including a second time stamp, from the livestock ID reader (300) to the monitoring node (200), and
- connecting (S140), in the monitoring mode (200), the identity of the individual (30; 31; 32) received from the livestock ID reader (300) to tracking data for that individual (30; 31; 32) by using the first and second time stamp.

2. The method according to claim 1, wherein the camera (12) is integrated in a light assembly (100) arranged above the livestock and in communication with the monitoring node (200).

3. The method according to claim 2, further comprising:
- measuring (S150), with the camera (12), the light condition inside the building,
- comparing (S160), with a controller (14) arranged in the light assembly (100), the measured light condition with reference values for a desired light condition, and
- controlling (S170) the output of a light source (10) arranged in the light assembly (100) with said controller (14), when there is a difference in the comparison between the measured and desired light condition, such that the light condition in the building for keeping the livestock corresponds to the reference values for the desired light condition.

4. A method of monitoring livestock inside of a building for keeping the livestock, the method being performed by a monitoring node (200) being part of a monitoring system comprising a camera (12), the monitoring node (200) and a livestock identity, ID, reader (300), wherein the camera (12) is arranged above the livestock and in communication with the monitoring node (200) and the livestock ID reader (300), the method comprising:
- receiving (S200), from the camera (12), tracking data, associated with livestock within a field of view of the camera (12), including a first time stamp, for each tracked individual (30; 31; 32) of the livestock,
- receiving (S210), from the livestock ID reader (300), an identity of an individual (30; 31; 32) of the livestock, including a second time stamp, that is passing the livestock ID reader (300),
- connecting (S220), the identity of the individual (30; 31; 32) received from the livestock ID reader (300) to the received tracking data for that individual (30; 31; 32) by using the first and second time stamp.

5. The method according to claim 4, wherein the camera (12) is integrated in a light assembly (100) arranged above the livestock and in communication with the monitoring node (200).

6. The method according to claim 5, further comprising:
- receiving (S230), from the light assembly (100), data relating to a motion of each tracked individual (30; 31; 32),
- comparing (S240), with a controller (214), the received data with stored data associated with livestock in heat, and in response to finding a match between the received data for an individual (30; 31; 32) of the livestock and the stored data,
- transmitting (S250), with a communication interface (216), an alarm message to an alarm device (180) comprising information that there is livestock in heat together with information about which individual (30; 31; 32) of the livestock that is in heat.

7. A monitoring system of monitoring livestock inside of a building for keeping the livestock, the monitoring system comprising a camera (12), a monitoring node (200) and a livestock identity, ID, reader (300), wherein the camera (12) is arranged above the livestock and in communication with the monitoring node (200) and the livestock ID reader (300) and camera (12), the monitoring node (200) and livestock ID reader (300) each comprise a controller (14; 214; 314), which each comprise a processor (34; 234; 334) and a memory (36; 236; 336), each memory (36; 236; 336) comprising instructions which when executed by the processor (34; 234; 334) causes the monitoring system to:
- track livestock within a field of view of the camera (12),
- send tracking data, including a first time stamp, for each tracked individual (30; 31; 32) of the livestock from the camera (12) to the monitoring node (200),
- obtain, with the livestock ID reader (300), an identity of the individual (30; 31; 32) of the livestock that is passing the livestock identity reader (300),
- send the obtained identity of the individual (30; 31; 32) of the livestock, including a second time stamp, from the livestock ID reader (300) to the monitoring node (200), and
- connect, in the monitoring mode (200), the identity of the individual (30; 31; 32) received from the livestock ID reader (300) to tracking data for that individual (30; 31; 32) by using the first and second time stamp.

8. The monitoring system according to claim 7, wherein the camera (12) is integrated in a light assembly (100) arranged above the livestock and in communication with the monitoring node (200).

9. The monitoring system according to claim 7 or 8, which is further caused to:
- measure, with the camera (12), the light condition inside the building,
- compare, with the controller (14) arranged in the light assembly (100), the measured light condition with reference values for a desired light condition, and
- control the output of a light source (10) arranged in the light assembly (100) with said controller (14), when there is a difference in the comparison between the measured and desired light condition, such that the light condition in the building for keeping the livestock corresponds to the reference values for the desired light condition.

10. A monitoring node (200) of monitoring livestock inside of a building for keeping the livestock, the monitoring node (200) being a part of a monitoring system comprising a camera (12), the monitoring node (200) and a livestock identity, ID, reader (300), wherein the camera (12) is arranged above the livestock and in communication with the monitoring node (200) and the livestock ID reader (300) and wherein the monitoring node (200) comprises a controller (214) comprising a processor (234) and a memory (236), the memory (236) comprising instructions which when executed by the processor (234) causes the monitoring node (200) to:
- receive, from the camera (12), tracking data, associated with livestock within a field of view of the camera (12), including a first time stamp, for each tracked individual (30; 31; 32) of the livestock,
- receive, from the livestock ID reader (300), an identity of an individual (30; 31; 32) of the livestock, including a second time stamp, that is passing the livestock identity reader (300),
- connect, the identity of the individual (30; 31; 32) received from the livestock ID reader (300) to the received tracking data for that individual (30; 31; 32) by using the first and second time stamp.

11. The monitoring node (200) according to claim 10, wherein the camera (12) is integrated in a light assembly (100) arranged above the livestock and in communication with the monitoring node (200).

12. The monitoring node (200) according to claim 11, which is further caused to:
- receive, from the light assembly (100), data relating to a motion of each tracked individual (30; 31; 32),
- compare, with the controller (214), the received data with stored data associated with livestock in heat, and in response to finding a match between the received data for an individual (30; 31; 32) of the livestock and the stored data,
- transmit, with a communication interface (216), an alarm message to an alarm device (180) comprising information that there is livestock in heat together with information about which individual (30; 31; 32) of the livestock that is in heat.

13. A computer program (38; 238; 338) comprising computer program code, the computer program code being adapted, if executed on a processor (34; 234; 334), to implement the method according to any one of the claims 1 to 3.

14. A computer program (238) comprising computer program code, the computer program code being adapted, if executed on a processor (236) to implement the method according to any one of the claims 4 to 6.

15. A computer program product comprising a computer readable storage medium (240), the computer readable storage medium having the computer program (238) according to claim 14.
